# EUROPEAN PATENT APPLICATION

(11) **EP 4 712 337 A2**
(43) Date of publication of application: **18.03.2026**
(21) Application number: 26154540.4
(22) Date of filing: 05.04.2023
(51) Int. Cl.: H02S 10/40

(54) **A CHARGING STATION**

(30) Priority: 07.04.2022 GB 202205091
(62) Divisional of application: 23717509.6
(71) Applicant: 3TI Energy Hubs Ltd, Guildford GU2 7YG (GB)
(72) Inventor: EVANS, Tim, Leatherhead, KT22 9AD (GB); LEES, Richard, Leatherhead, KT22 9AD (GB); POTTER, Mark, Leatherhead, KT22 9AD (GB)
(74) Representative: Keeling, Thomas Michael

(57) **Abstract**

A charging station for an electric vehicle, EV, comprising: a container having an electric vehicle, EV, charging port for charging the EV; a first photovoltaic, PV, panel coupled the container, wherein the first PV panel is arranged to be electrically coupled to the EV charging port; and a cut-away section between the ends of the container to allow at least a portion of the EV to park within the footprint of the container.

## Description

### BACKGROUND

With increased interest being placed in environmentally friendly vehicles there has been a corresponding increase in interest in the use of electric vehicles, EV. As a result, some estimates for the number of required public EV charge stations in the UK (including workplace charging) vary from 2 to 3 Million by 2035, forming a critical part of the 2050 net-zero transition. This is in addition to the installation of domestic and rapid chargers, which are set to exceed 8 million in total with projected annual sales of 2.5 million electric vehicles.

However, the current number of public EV charging stations is in the region of 30,000.

Whilst it is expected that the deployment of public EV charging stations will accelerate, its trajectory remains a long way short of what is required.

One of the biggest technical challenges deploying large numbers of EV charge stations is the electrical infrastructure needed to support them, for example:
1) The high cost of installing sufficient grid energy generation and distribution capacity;
2) Challenges of running additional electrical cables and distribution network hardware across urban, suburban and rural locations;
3) The time it takes to plan, execute, and finance such upgrades, manage disruption, and avoid potential grid instability and failures.

As a result, public EV charge stations can take too long to install with high installation costs.

It is desirable to improve this situation.

In accordance with an aspect of the present invention there is provided a charging station according to the accompanying claims.

The present invention provides a transportable charging station having one or more PV panels in which the orientation of the PV panel(s) may be optimised based on the location of the charging station and/or direction of the sun, while having both a large PV panel surface area to allow optimised power generation during use in conjunction with the ability to place the PV panel(s) in a safe storage position during transportation. Additionally, the charging station configuration allows a maximum number of EV vehicles to be charged at any given time by making some of the charging station footprint area available for parking, while maximising the PV panel surface area, where an EV vehicle may include any electrically propelled or electrically assisted vehicles, for example cars, vans, trucks, eBikes, eCargo Bikes, and/or electric scooters.

The present invention will now be described, by way of example, with reference to the accompanying drawings in which:
Figure 1 illustrates a charging station according to an embodiment of the present invention;
Figure 2 illustrates a charging station according to an embodiment of the present invention;
Figure 3 illustrates a charging station according to an embodiment of the present invention;
Figure 4 illustrates a charging station according to an embodiment of the present invention;
Figure 5 illustrates a mounting point for a container;
Figure 6 illustrates a charging station according to an embodiment of the present invention;
Figure 7 illustrates a charging station according to an embodiment of the present invention;
Figure 8 illustrates a charging station according to an embodiment of the present invention.

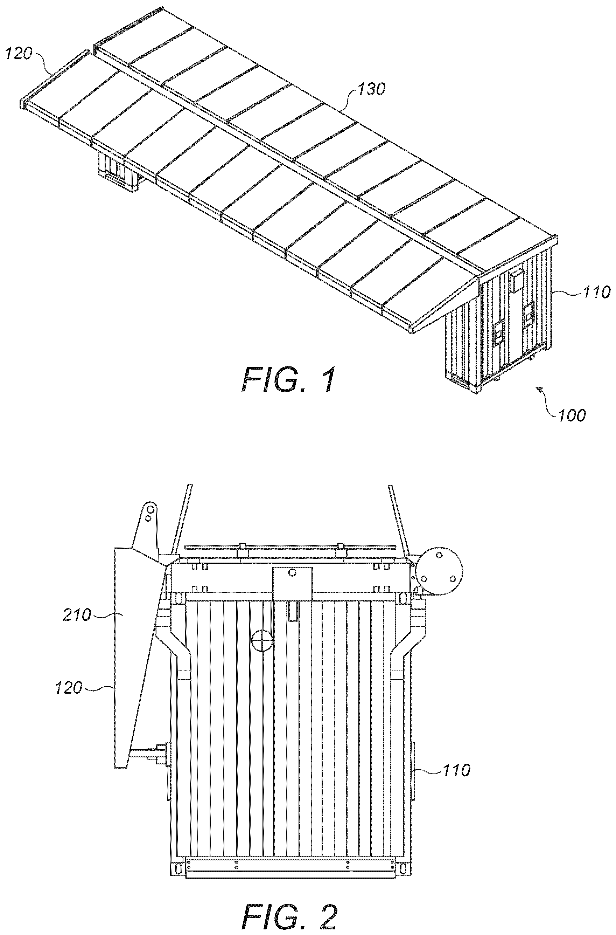

In accordance with an embodiment of the present invention, Figure 1 illustrates a charging station 100 comprising a container 110, for example an ISO container which is typically 8ft or 2.43m wide, 8.5ft, or 2.59m high and come in two lengths, either 20ft or 6.06m and 40ft, or 12.2m, having a first photovoltaic, PV, panel 120 attached to one side of the container 110.

Typically the first PV panel will comprise an array of PV panels, as such any reference to PV panel includes an array of PV panels.

Preferably the first PV panel 120 is attached to the container 110 via a first support element 210, which in a preferred embodiment is rotatably coupled to the container 110 to allow the first PV panel 120 to be rotated from a storage position, to a first orientation or a second orientation. In the storage position of the first PV panel 120, the plane of the first PV panel 120 is substantially parallel to the side wall of the container 110 to which the first PV panel 120 is attached, as illustrated in Figure 2, In the first orientation of the first PV panel 120 the plane of the first PV panel 120 is orientated at an angle in a downward direction from the top of the container 110 while extending away from the container 110, as illustrated in Figure 1. In the second orientation of the first PV panel 120 the plane of the first PV panel 120 is orientated at an angle in an upward direction from the top of the container 110. Although the present embodiment describes the first PV panel 120 being rotated to a first orientation or second orientation, the first PV panel 120 may be rotated to any position.

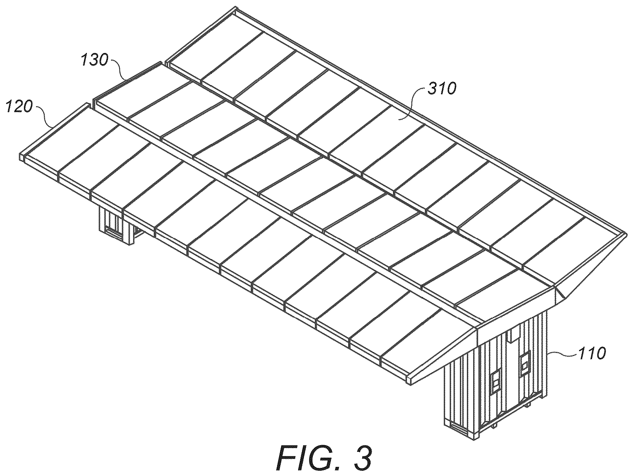

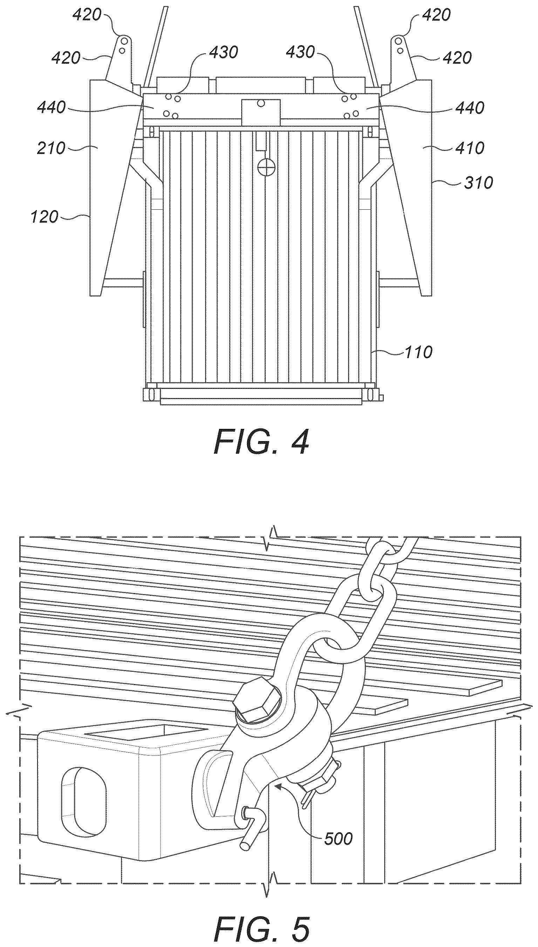

To improve the total PV panel surface area a second PV panel 130 is preferably mounted to the top of the container 110, as illustrated in Figure 1. Additionally, a third PV panel 310 maybe attached to a second side of the container 110, see Figure 3, where in a preferred embodiment the third PV panel 310 is attached to the container 110 via a second support element 410, which in a preferred embodiment is rotatably coupled to the container 110 to allow the third PV panel 310 to be rotated from a storage position to a third orientation or a fourth orientation. In the storage position of the third PV panel 310, the plane of the third PV panel 310 is substantially parallel to the side wall of the container 110 to which the third PV panel 310 is attached, as illustrated in Figure 4. In the third orientation of the third PV panel 310 the plane of the third PV panel 310 is orientated at an angle in a downward direction from the top of the container while extending away from the container 110. In the fourth orientation of the third PV panel 310 the plane of the third PV panel 310 is orientated at an angle in an upward direction from the top of the container 110. Although the present embodiment describes the third PV panel 310 being rotated to a third orientation or fourth orientation, the third PV panel 310 may be rotated to any position.

Accordingly, the orientation of the first PV panel and the third PV panel may be independently chosen depending on the required PV panel configuration. For example, the first PV panel may be orientated at an angle in a downward direction from the top of the container while the third PV panel may be orientated in an upward direction from the top of the container, or vice versa, thereby allow both the first PV panel and the third PV panel to have similar orientations with respect to the sun.

The container 110 includes one or more charging ports for charging an electric vehicle, to which the first PV panel 120, the second PV panel 130 and/or the third PV panel 310 is electrically coupled, thereby allowing electrical current generated by the first PV panel 120, the second PV panel 130 and the third PV panel 310 to be supplied to an electric vehicle.

Typically, the container 110 will house circuitry for converting the electrical current/voltage generated by the first PV panel 120, second PV panel 130 and third PV panel 310 into a form suitable for being accepted by an electric vehicle, which may include the ability to provide AC and/or DC charging.

To enhance the usability of the charging station100, preferably the container 110 houses a battery that is electrically coupled to both the charging port and the first PV panel 120, the second PV panel 130 and/or the third PV panel 310 to allow the battery to store surplus energy generated by the PV panels while also being capable of being used to charge an electric vehicle connected to the charging port.

Preferably the container 110 includes a storage area for storing EV vehicles, for example electric bicycles, mobility scooter, eScooter, eBike and/or eCargo Bike, wherein the storage area includes a charging port arranged to be electrically connected to one or more of the PV panels for charging the EV vehicle. The storage area may also be used for other purposes, for example as battery swap locker, to allow rechargeable batteries to be shared between different users, or a delivery service locker that acts as an automated postal box that allows users of a self-service collection service to collect parcels and oversize letters as well as to dispatch parcels.

To further enhance the usability of the charging station 100, the EV charging point can be electrically coupled to an electrical grid to allow an electric vehicle to be charged via the first PV panel 120, the second PV panel 130, and the third PV panel 310, the battery and/or the electrical grid. This configuration would also provide the option of allowing the battery to be charged via the electrical grid.

To facilitate the movement and transportability of the container 110, the container 110 includes four mounting points 500, as illustrated in Figure 5, to allow the container to be lifted by a crane or other suitable device. However, any number of mounting points may be used.

To retain the first support element 210 in the first orientation or second orientation and the second support element 410 in the third orientation or fourth orientation, a locking device is use, for example via the use of locking pins. By way of illustration, as shown in Figure 5 both the first support element 210 and the second support element 410 include two mounting apertures 420 while the top portion on the narrow sides of the container include two sets of complementary mounting apertures 430, 440 for each respective support element, which allow the first support element 210 to be mounted in the first orientation when locking pins are located in the support elements mounting apertures 420 and the complementary upper set of mounting apertures 430 on the container 110 and in the second orientation when locking pins are located in the support elements mounting apertures 420 and the complementary lower set of mounting apertures 440 on the container. Similarly, the second support element may be mounted in the third orientation when locking pins are located in the support elements mounting apertures 420 and the complementary upper set of mounting apertures 430 on the container and in the fourth orientation when locking pins are located in the support elements mounting apertures 420 and the complementary lower set of mounting apertures 440 on the container 110.

Preferably, the container 110 includes a mechanism for allowing the first support element 210 to be moved between its storage position and the second orientation and the third orientation and/or allowing the second support element 410 to be moved between its storage position and the third orientation and the fourth orientation.

As illustrated in Figures 2 and 4, in a preferred embodiment the first support element 210 and/or the second support element 410 are wedged shaped, where the section of the first support element 210 and the second support element 410 having the thickest portion is rotatably coupled to the container 110.

An advantage of the support elements being wedged shaped is that it allows a guttering system to be a placed around the perimeter of the respective support elements to allow water coming of both the first PV panel 120 and the third PV panel 310 to be channelled to a down pipe mounted on the container 110 when the first PV panel 120 is in either the first or second orientation and the second PV panel 310 is in either the third or fourth orientation. For example, if the angle of the wedge for the first support element 210 is greater than the angle of the first PV panel 120 above the top of the container when in the second orientation, namely at an angle in an upward direction from the top of the container, the gutting along the side portions of the first support element 210 will still be angled in a downward direction towards the container 110 and the downpipe. Similarly, if the angle of the wedge for the second support element 410 is greater than the angle of the second PV panel 410 above the top of the container when in the fourth orientation, namely at an angle in an upward direction from the top of the container 110, the gutting along the side portions of the second support element 410will still be angled in a downward direction towards the container 110 and the downpipe.

Preferably, the height of the gutter along the sides of the first and/or second support element is substantially the same height as the first and/or second support element.

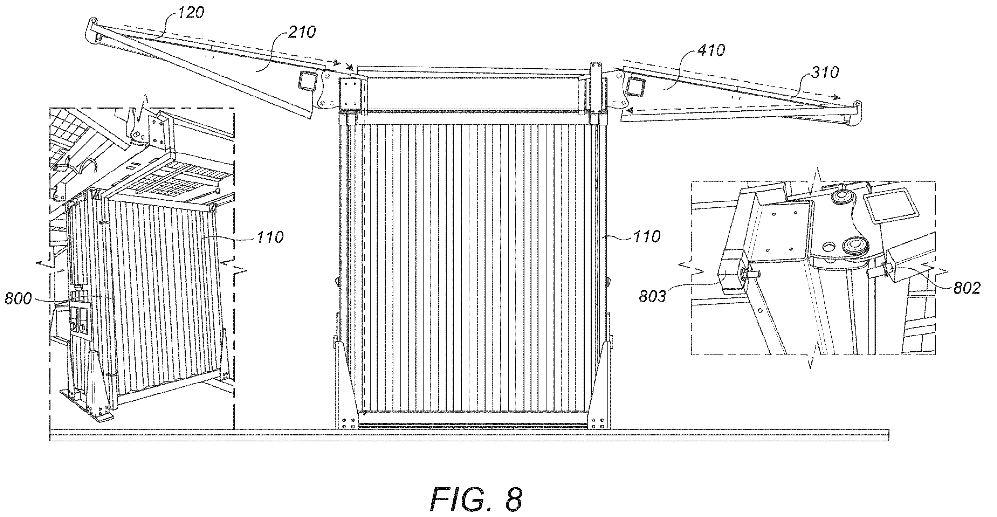

Figure 8 illustrates an embodiment of the guttering system, where the first support element 210 is attached to the container 110 in the second orientation and the second support element 410 is attached to the container 110 in the third orientation with a downpipe 800 attached to the container 110 adjacent to the first support element 210 to allow water coming off the first PV panel 120 and the third PV panel 310 to be channelled to the ground in a controlled fashion.

In the illustrated configuration of this embodiment, water coming off the first PV panel 120 (which slopes downwardly towards the container) is channelled directly to the downpipe 800 via a gutter extending along the container 110 at the junction between the first support element 210 and the container 110.

Water from the third PV panel 310 (which slopes downwardly away from the container) is caught in a gutter extending along the outer edge of the PV panel 310, from where it is directed to a guttering system 801 running along the bottom edge of the wedge-shape second support element 410 at one end of the container. An inner end of the guttering system 801 is coupled to a second downpipe (not shown), attached to the container 110 adjacent to the second support element 410, via connectors 802 and 803, joined by a flexible hose (not shown) to allow water running off the third PV panel to be channelled to the downpipe. Alternatively, the gutter arrangements for both PV panels may be configured to channel water to a single, shared downpipe.

Although not shown, if the orientation of the first support element 210 and the second support element 410 were to be reversed (i.e. the first support element 210 is in the first orientation and the second support element 410 is in the fourth orientation), then water from the first PV panel 120 would flow to the downpipe 800 via a guttering system running along the bottom edge of the wedge-shape first support element 210, while water from the third PV panel 310 would be channelled directly to its respective downpipe via a gutter extending along the container 110 at the junction between the second support element 410 and the container 110.

As illustrated here and already noted above, the wedge shape of the support elements allows for a guttering system that allows water to be channelled to one or more downpipes on the container irrespective of whether the support elements are in their first/third or second/fourth orientations.

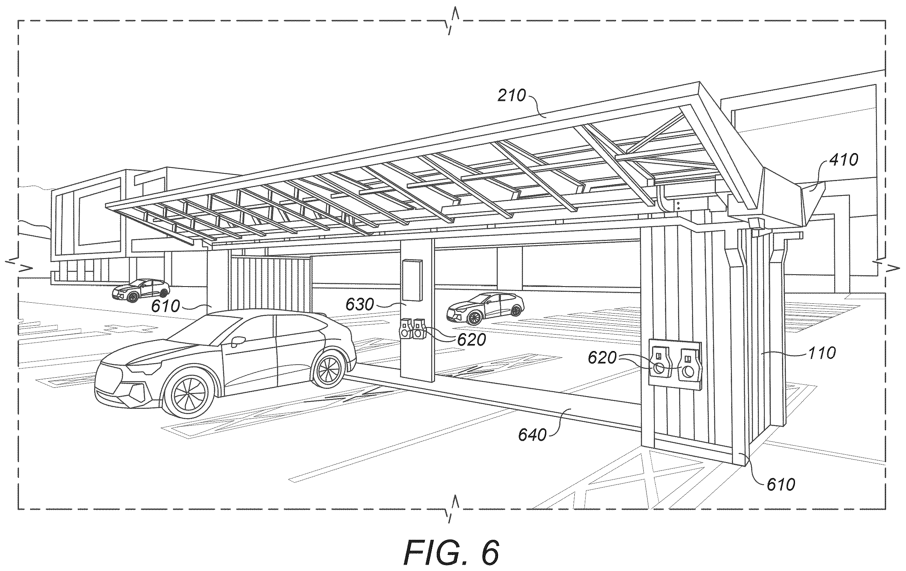

To maximise parking spaces around the charging station 100, preferably the container 110 includes a cut-away section between both ends of the container to allow at least a portion of an electric vehicle to park within the footprint of the container 110, as illustrated in Figure 6 which shows both the first PV panel 120and the third PV panel oriented in the second orientation and fourth orientation respectively. As shown in Figure 6, for a 2.43m wide, 2.59m high and 12.2m ISO container, the cutaway sections allow eight cars to be parked within the footprint of the container 110 plus two cars at each end of the container, thereby allowing 12 cars to be charged by the charging station 100.

As also shown in Figure 6, the container 110 includes two housing sections 610 at each end of the container 110, where in a preferred embodiment two EV charging ports 620 are mounted on the front and back of each housing section 610, thereby providing eight charging ports. However, any number of EV charging ports may be attached.

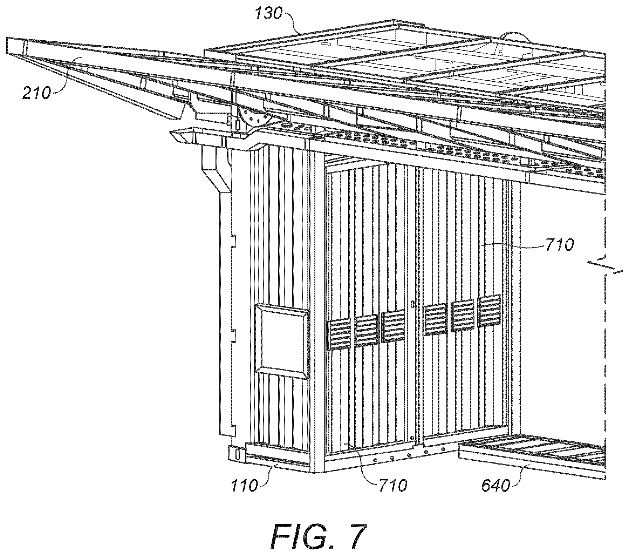

In a preferred embodiment, the housing section 610 at one end of the container contains a battery that is arranged to be electrically coupled to anyone of the EV charging ports 620 attached to the container 110 for charging an EV while the housing section 610 at the other end of the container 110 includes electronic components for controlling current flow from the respective PV panels to an EV and/or the battery. For improved access to the housing sections 610 at each end of the container 110 preferably one or both of the housing sections 610 include access doors 710 located on the inside side of the housing sections 610, as illustrated in Figure 7.

To increase the number of EV charging ports 620, as illustrated in Figure 6, an EV charging port 620 may be mounted on a column 630 extending from the ground to the top of the container 110 located substantially in the middle of the cut-away section, where in the present embodiment two EV charging ports 620 are mounted on each side of the column 630. However additional columns may be used in the cut-away section, thereby providing additional opportunities to include additional charging ports.

Preferably a kerb element 640 is mounted at the bottom of the cut-away section between the housing 610 at the first end of the container 110 and the housing 610 at the second end of the container 110 that acts as a wheel stop for the EV vehicle, as illustrated in Figure 6. Preferably the columns and kerb elements provide additional structural support for the charging station.

### ANNEX A

Further aspects are set out in the following paragraphs.
1. A charging station for an electric vehicle, EV, comprising a container having an electric vehicle, EV, charging port for charging the EV and a first photovoltaic, PV, panel coupled to the container, wherein the first PV panel is movable from a first orientation, in which the plane of the first PV panel is substantially parallel to a first side wall of the container, to a second and third orientation in which the first PV panel extends away from the first side of the container, such that in the second orientation the plane of the first PV panel is orientated at an angle in a downward direction from the top of the container and in the third orientation the plane of the first PV panel is orientated at an angle in an upward direction from the top of the container, wherein the first PV panel is arranged to be electrically coupled to the EV charging port.
2. A charging station according to paragraph 1, wherein the first PV panel is rotatably coupled to the container and the first PV panel is arranged to be rotatable from the first orientation to the second and third orientation.
3. A charging station according to paragraph 1 or 2, wherein the container has the dimensions of an ISO container.
4. A charging station according to any one of paragraphs 1 to 3, wherein the first PV panel is mounted on a first support element that is rotatably coupled to the container.
5. A charging station according to any one of paragraphs 1 to 4, wherein the container includes a cut-away section between both ends of the container to allow at least a portion of the EV to park within the footprint of the container.
6. A charging station according to paragraph 5, wherein both ends of the container include a housing section, wherein the housing at a first end of the container contains a battery that is arranged to be electrically coupled to the EV charging port for charging the EV and/or the housing at a second end of the container includes electronic components for controlling current flow from the first PV panel to the EV.
7. A charging station according to paragraph 5, wherein a housing at a first end of the container includes an EV charging port and a housing at a second end of the container includes an EV charging port.
8. A charging station according to any one of paragraphs 6 to 7, further comprising an EV charging port mounted on a column extending from the ground to the top of the container located substantially in the middle of the cut-away section.
9. A charging station according to any one of paragraphs 6 to 8, further comprising a kerb element mounted at the bottom of the cut-away section between the housing at the first end of the container and the housing at the second end of the container that acts as a wheel stop for the EV vehicle.
10. A charging station according to any one of the paragraphs 1 to 9, wherein the EV charging point is electrically coupled to an electrical grid to allow the EV to be charged via the first PV panel and/or the electrical grid.
11. A charging station according to any one of the paragraphs 1 to 10, further comprising a further PV panel mounted on the top of the container, wherein the further PV panel is electrically coupled to the EV charging port.
12. A charging station according to paragraph 4 and any one of paragraphs 5 to 11 when dependent upon paragraph 4, wherein the first support element is wedged shaped, wherein the section of the first support element having the thickest portion is coupled to the container.
13. A charging station according to paragraph 4 and any one of paragraphs 5 to 12 when dependent upon paragraph 4, further comprising means for moving the first support element between the first orientation, the second orientation and the third orientation.
14. A charging station according to paragraph 4 and any one of paragraphs 5 to 13 when dependent upon paragraph 4, further comprising guttering placed around the perimeter of the first support element to allow water coming of the first PV panel to be channelled to a down pipe when the first PV panel is in the second or third orientation.
15. A charging station according to paragraph 14, wherein the height of the gutter along the sides of the first support element is substantially the same height as the first support element.
16. A charging station according to paragraphs 14 or 15, wherein the shape of first support element allows the gutter to extend in a downward direction from an end portion of the first support element to the portion of the first support element coupled to the container when the first support element is orientated in the second orientation and the third orientation.
17. A charging station according to any one of paragraphs 1 to 16, further comprising a second PV panel, wherein the second PV panel is arranged to be movable from a fourth orientation, in which the plane of the second PV panel is substantially parallel to a second side wall of the container, to a fifth and sixth orientation, in which the second PV panel extends away from the second side of the container, such that in the fifth orientation the plane of the second PV panel is orientated at an angle in a downward direction from the top of the container and in the sixth orientation the plane of the second PV panel is orientated at an angle in an upward direction from the top of the container, wherein the second PV panel is electrically coupled to the EV charging port.
18. A charging station according to paragraph 17, wherein the second PV panel is rotatably coupled to the container and the second PV panel is arranged to be rotatable from the fourth orientation to the fifth orientation and sixth orientation.
19. A charging station according to paragraphs 17 or 18, wherein the second PV panel is mounted on a second support element that is rotatably coupled to the container.
20. A charging station according to paragraph 19, wherein the second support element is wedged shaped, wherein the section of the second support element having the thickest portion is coupled to the container.
21. A charging station according to paragraphs 19 or 20, further comprising means for moving the second support element between the fourth orientation, the fifth orientation and the sixth orientation.
22. A charging station according to any one of paragraphs 19 to 21, further comprising guttering placed around the perimeter of the second support element to allow water coming of the second PV panel to be channelled to a down pipe when the second PV panel is placed in the fifth or sixth orientation.
23. A charging station according to paragraph 22, wherein the height of the gutter along the sides of the second support element is substantially the same height as the second support element.
24. A charging station according to paragraphs 22 or 23, wherein the shape of the second support element allows the gutter to extend in a downward direction from an end portion of the second support element to the portion of the second support element coupled to the container when the second support element is orientated in the fifth orientation or sixth orientation.
25. A charging station according to any one of the paragraphs 1 to 24, wherein the container includes a storage area for storing bicycles, wherein the storage area includes a charging port arranged to be electrically connected to the first PV panel for charging an electric bicycle and/or a delivery service locker.

## Claims

1. A charging station for an electric vehicle, EV, comprising:
a container having an electric vehicle, EV, charging port for charging the EV;
a first photovoltaic, PV, panel coupled to the container, wherein the first PV panel is arranged to be electrically coupled to the EV charging port; and
a cut-away section between the ends of the container to allow at least a portion of the EV to park within the footprint of the container.

2. A charging station according to claim 1, comprising a plurality of electric vehicle, EV, charging ports for simultaneously charging a plurality of EVs.

3. A charging station according to claim 2, wherein the container has a generally rectangular footprint, with two shorter ends opposite one another and two longer sides joining the ends, and wherein the cut-away section is between the two shorter ends of the container to allow at least a portion of each of the plurality of EVs to park within the footprint of the container.

4. A charging station according to claim 3, configured to enable charging EVs on both sides of the container.

5. A charging station according to claim 3 or claim 4, wherein the first PV panel is mounted along the top of a first one of the long sides of the container and extends away from the first long side of the container.

6. A charging station according to claim 5, wherein the first PV panel and the cut-away section are configured so that the first PV panel extends over an EV parked within the cut-away section on the first long side of the container.

7. A charging station according to any one of claims 3 to 6, comprising a second PV panel electrically coupled to the EV charging ports, and mounted along the top of a second one of the long sides of the container and extending away from the second long side of the container.

8. A charging station according to claim 7, wherein the second PV panel and the cut-away section are configured so that the second PV panel extends over an EV parked within the cut-away section on the second long side of the container.

9. A charging station according to any one of claims 2 to 8, wherein the plurality of EVs are a plurality of electric cars and/or electric vans.

10. A charging station according to any one of claims 2 to 9, wherein the container includes a housing section at each end, and the cut-away section is between the two housing sections.

11. A charging station according to claim 10, wherein the housing at a first end of the container contains a battery that is arranged to be electrically coupled to the EV charging ports for charging the EVs.

12. A charging station according to claim 10 or claim 11, wherein the housing at a second end of the container includes electronic components for controlling current flow from the first PV panel to the EVs.

13. A charging station according to any one of claims 2 to 12, wherein the EV charging points are electrically coupled to an electrical grid to allow the EVs to be charged via the first PV panel and/or the electrical grid.

14. A charging station according to any one of the preceding claims, wherein the container includes a storage area for storing one or more electric bicycles, mobility scooters, eScooters, eBikes and/or eCargo Bikes, wherein the storage area includes a charging port arranged to be electrically connected to the first PV panel for charging the one or more electric bicycles, mobility scooters, eScooters, eBikes and/or eCargo Bikes.

15. A charging station according to any one of the preceding claims, comprising a battery swap locker and/or a delivery service locker.
